(19) Europäisches Patentamt / European Patent Office / Office européen des brevets

(11) **EP 3 159 394 A1**

(12) **EUROPEAN PATENT APPLICATION**

(43) Date of publication:
**26.04.2017 Bulletin 2017/17**

(51) Int Cl.:
***C11D 3/22*** *(2006.01)*     ***C11D 3/386*** *(2006.01)*
***C11D 11/00*** *(2006.01)*

(21) Application number: **15190592.4**

(22) Date of filing: **20.10.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(71) Applicant: **The Procter & Gamble Company Cincinnati, OH 45202 (US)**

(72) Inventors:
• **DE BUZZACARINI, Francesco**
  **1853 Strombeek-Bever (BE)**
• **VERSTRAETEN, William Mario Laurent**
  **1853 Strombeek-Bever (BE)**

(74) Representative: **Yorquez Ramirez, Maria Isabel Patent Department Procter & Gamble Technical Centres Limited Whitley Road Longbenton Newcastle upon Tyne NE12 9TS (GB)**

(54) **METHOD OF REMOVING STAINS BY TREATING FABRICS WITH STARCH AND AMYLASE**

(57)     Method for removing stains from fabric, comprising the steps of (a) applying starch to a fabric, (b) in a subsequent wash cycle, washing the fabric in a wash liquor comprising amylase enzyme. Use of starch for facilitating the removal of a stain from a fabric, wherein the fabric is treated with starch prior to deposition of the soil.

**Description**

FIELD OF THE INVENTION

A method of treating fabrics to reduce or eliminate stains.

BACKGROUND OF THE INVENTION

Parents have spent many a Sunday afternoon laboriously scrubbing stains off their children's clothes, while through the kitchen window, watching the very same children playing in the sun and putting stains in yet more of their clothing. Yet more individuals have headed off to work, only to find a stain on their work clothes, which has survived an earlier wash. Stains, and general dinginess on fabrics, are universally disliked when found, especially on fabrics that have just been washed.

As a result, formulators have worked hard to develop improved laundry detergent compositions and methods, which eliminate as much of stains and dinginess as possible. Yet still, some stains and dinginess persist in remaining on the washed fabric. Moreover, many of the soil release agents used, such as synthetic soil release polymers, are non-biodegradeable or accumulate on the fabric since they are difficult to remove during a subsequent wash.

Hence, a need remains for improved means for removing stains and dinginess from fabrics, and most especially using biodegradable actives.

DE 10127919 A1 describes washing processes, for removing mineral or starch deposits in industrial or domestic dishwashers. US 2609326 A describes cold water dispersible starch products and method of preparing them. US 2999031 A describes starch preparations for laundry. EP 0 763 593 A1 describes starch based adjuncts for detergents, including for both antiredeposition properties and soil release properties.

SUMMARY OF THE INVENTION

The present invention relates to a method for removing stains from fabric, comprising the steps of: applying starch to a fabric and then in a subsequent wash cycle, washing the fabric in a wash liquor comprising amylase enzyme. The present invention further relates to the use of starch for facilitating the removal of a stain from a fabric, wherein the fabric is treated with starch prior to deposition of the soil.

DETAILED DESCRIPTION OF THE INVENTION

Improved stain removal can be achieved by first pretreating the fabric with starch, and then treating the fabric with a composition comprising amylase in a subsequent wash.

As used herein, "liquid laundry detergent composition" refers to any laundry treatment composition comprising a fluid capable of wetting and cleaning fabric e.g., clothing, in a domestic washing machine. The composition can include solids or gases in suitably subdivided form, but the overall composition excludes product forms which are nonfluid overall, such as tablets or granules. The liquid detergent compositions preferably have densities in the range from 0.9 to 1.3 grams per cubic centimeter, more specifically from 1.00 to 1.10 grams per cubic centimeter, excluding any solid additives but including any bubbles, if present.

All percentages, ratios and proportions used herein are by weight percent of the composition, unless otherwise specified. All average values are calculated "by weight" of the composition or components thereof, unless otherwise expressly indicated.

Applying starch to the fabric:

The starch is preferably applied to the fabric: during a wash cycle, during a rinse cycle, on the wet fabrics after laundering, or on the dried fabric after the laundering process has been completed. When applied during a wash cycle, the wash liquor does not comprise amylase. Suitable means of application include spraying, soaking, and combinations thereof. In preferred embodiment, the starch is applied as part of a professional laundry process. In such processes, the starch is typically applied after the main wash step, and before drying.

Professional laundry includes institutional and industrial (sometimes also referred to as commercial) laundry. Institutional laundry refers to textile washing operations usually run in business sites, normally referred to as On-Premise or In-House Laundry Operations. Typical businesses can be for instance hotels, restaurants, care homes, hospitals, spas, health or sport clubs, schools, and similar institutions. Industrial laundry refers to textile washing operations carried out in dedicated places typically for the above businesses.

By "professional laundry machine" is herein meant a laundry machine which a capacity higher than 5 kg, preferably higher than 15 kg and more preferably higher than 25 kg of dry laundry. These machines are designed for professional use, and often include features such as computerized wash programs and compatibility with automatic product dosing systems.

The starch can also be applied by a domestic user, including by spraying, soaking, and combinations thereof. For instance, the fabric can be pretreated with starch as part of a rinse in a domestic washing machine, or sprayed onto the fabric.

There are two main types of professional laundry machines: washers-extractors which operate in a batch mode or tunnel washing machines that operate in continuous mode. The professional laundry machines for use herein, in the case of washers-extractors preferably have a drum volume of at least 0.15 m$^3$, preferably at least 0.2 m$^3$, more preferably at least 0.3 m$^3$ and especially at least 0.5 m$^3$. The professional laundry machines for use herein, in the case of front load preferably have a drum diameter of at least 0.5 m, preferably at least 0.8 m and more preferably at least 1 m. Tunnel washers, also called Continuous Batch Washers are long chambers made up of a series of compartments through which the laundry is moved. Their capacity is typically higher than 1000 kg laundry /hour, sometimes higher than 4000 kg laundry/ hour.

Any suitable starch can be used for the methods described herein. In preferred embodiments, the starch is cold water soluble, for instance, as described in EP 0 763 593 A1.

The cold-water-soluble starch may be derived from any of the known sources of starches such as arrowroot, wheat, sago, maize, potato, rice, tapioca, or the waxy starches. Preferred cold-water-soluble starches are derived from maize and potato starches. More preferred starches are cold-water-soluble waxy starches, including without limitation, waxy maize, waxy rice, waxy barley, and waxy potato.

For easy of processing, the starch may have a viscosity ranging from 10 WF to 95 WF (water fluidity), or from 20 WF to 90 WF), which is a measure of the solution viscosity of the gelatinized starch. A suitable method for determining WF is described at columns 8-9 of U.S. Pat. No. 4,499,116. A suitable method of hydrolyzing starch, in order to improve the water solubility, includes one described by U.S. Pat. No. 4,499,116, with specific mention to column 4.

The starches may be chemically modified prior to treating them to make them cold-water-soluble, although cold water-soluble starches which have not been chemically modified may be used. For example, the starch may be esterified to introduce carboxyl functionality into the starch backbone. Exemplary anhydrides which may be used include alkenylsuccinic anhydride, alkylsuccinic anhydride, succinic anhydride, maleic anhydride and phthalic anhydride. Polyols, such as poly(alkylene oxides) may be incorporated into the starch prior to making the starch cold-water-soluble. The starches also may be reacted with carboxylic acids such as citric acid and 1,2,3,4-tetracarboxybutane. An alternative method of introducing carboxylate functionality into the starch molecule is by free-radical graft polymerization of a suitable vinyl monomer such as acrylic acid or maleic acid.

The starch also may be etherified by reacting halocarboxylic acids in a Williamson's ether synthesis to produce carboxyalkyl starches. Other chemical modifications which typically are made to starches or which will be readily apparent to those skilled in the art having the benefit of this disclosure may also be used to prepare the cold-water-soluble starches, including oxidation using means known in the art.

By cold-water-soluble starch is meant a starch that when added to water at ambient temperature, for instance, 21°C, manifests a complete disruption of the granular structure and the formation of a colloidal dispersion. In one treatment for making the starch cold-water-soluble, the starch may be pregelatinized by simultaneous, or consecutive, cooking and spray drying. An aqueous slurry of the starch, either chemically unmodified or chemically modified, is fed into an atomizing chamber within a spray nozzle. A heating medium is injected into the atomizing chamber, such as steam. The starch slurry is simultaneously cooked and atomized as the heating medium forces the starch through a vent at the bottom of the chamber. The atomized starch is then dried, preferably by spray-drying, although other methods of drying such as drum-drying may be used. Details of the process and reference to other processes are set forth in U.S. patent 5,149,799, in the name of Rubens. Alternately, other methods which are known to those skilled in the art for making the starches cold-water soluble may be used.

Alternatively, starch which is not cold water soluble can be used. However, such starch typically first has to be solubilized. For instance, a dry starch powder can be added to water at a temperature of from 15°C to 25°C and then heated to "cook" or gelatinize the starch. This gelatinization process is a well-known phenomenon, and is described in the literature, such as in Cereal Foods World, (33) 306, 1988. Gelatinization refers to the collapse (disruption) of molecular orders within the starch granules, resulting in granule swelling, native crystallite melting, loss of birefringence, and leaching of soluble components (primarily amylose). Some amylose leach can occur at temperatures below the gelatinization temperature. The temperature of initial gelatinization and the range over which gelatinization occurs depends on the method used to determine it and is governed by the starch concentration, method of observation, granule type, and heterogeneities within the granule population under observation. Starch pasting is the phenomenon following gelatinization when a starch slurry containing excess water is heated. It involves further granule swelling, additional leaching of soluble components, and total disruption of granules, resulting in molecules and aggregates of molecules in dispersion or solution.

The starch can be partially gelatinized or fully gelatinized before being applied to the fabric, though full gelatinization is preferred.

If the starch is delivered in the last rinse of a washing machine, the starch is preferably added to the rinse water at a level of from 0.1 to 50 g of starch per Kg of dry fabric, more preferably at a level of from 3 to 33 g/Kg, most preferably at a level of from 12 to 25 g/Kg.

Once the starch has been applied, the fabric is then dried conventionally, for instance by tumble drying, line drying, and combinations thereof.

Wash liquor:

After soiling, the fabric is washed in a wash liquor which comprises amylase enzyme. While the wash liquor can be part of a domestic laundry process, professional laundry washing processes are preferred.

The amylase enzyme can be added directly to the wash liquor, or as part of a detergent composition which is diluted to form the wash liquor.

Amylase is an enzyme that catalyses the hydrolysis of starch into sugars. Amylase is present in the saliva of humans and some other mammals, where it begins the chemical process of digestion. All amylases are glycoside hydrolases and act on $\alpha$-1,4-glycosidic bonds. Amylase are typically added to laundry detergent compositions in order to catalyze the breakdown of starch-based stains, such as gravy, ragu and other food sauces, chocolate based beverages, ice creams, pasta, bananas, potatoes and the like.

Surprisingly, where the fabric has been treated with starch before soiling, the starch pretreatment has been found to improve the removal of such starch based stains removed by amylase. Even more surprisingly, the starch pretreatment has been found to improve the removal of stains which are not typically degraded by amylase, such as oils or other food greases, cosmetics such as foundation and lipstick stains, clays and other particulate inorganic materials.

The amylase enzyme is preferably present in the wash liquor at a level of from 0.001 ppm to 10 ppm, preferably 0.01 ppm to 1 ppm, more preferably 0.03 ppm to 0.2 ppm.

Suitable amylases are alpha-amylases, including those of bacterial or fungal origin. Chemically or genetically modified mutants (variants) are included. A suitable alkaline alpha-amylase is derived from a strain of Bacillus, such as Bacillus licheniformis, Bacillus amyloliquefaciens, Bacillus stearothermophilus, Bacillus subtilis, or other Bacillus sp., such as Bacillus sp. NCIB 12289, NCIB 12512, NCIB 12513, sp 707, DSM 9375, DSM 12368, DSMZ no. 12649, KSM AP1378, KSM K36 or KSM K38. Suitable amylases include:

(a) alpha-amylase derived from Bacillus licheniformis (P06278, AMY_BACLI), and variants thereof, especially the variants with substitutions in one or more of the following positions: 15, 23, 105, 106, 124, 128, 133, 154, 156, 181, 188, 190, 197, 202, 208, 209, 243, 264, 304, 305, 391, 408, and 444.

(b) AA560 amylase (CBU30457, HD066534) and variants thereof, especially the variants with one or more substitutions in the following positions: 26, 30, 33, 82, 37, 106, 118, 128, 133, 149, 150, 160, 178, 182, 186, 193, 203, 214, 231, 256, 257, 258, 269, 270, 272, 283, 295, 296, 298, 299, 303, 304, 305, 311, 314, 315, 318, 319, 339, 345, 361, 378, 383, 419, 421, 437, 441, 444, 445, 446, 447, 450, 461, 471, 482, 484, optionally that also contain the deletions of D183* and G184*.

(c) variants exhibiting at least 90% identity with the wild-type enzyme from Bacillus SP722 (CBU30453, HD066526), especially variants with deletions in the 183 and 184 positions. Suitable commercially available alpha-amylases are Duramyl®, Liquezyme® Termamyl®, Termamyl Ultra®, Natalase®, Supramyl®, Stainzyme®, Stainzyme Plus®, Fungamyl® and BAN®) (Novozymes A/S), Bioamylase® and variants thereof (Biocon India Ltd.), Kemzym® AT 9000 (Biozym Ges. m.b.H, Austria), Rapidase®, Purastar®, Optisize HT Plus®, Enzysize®, Powerase® and Purastar Oxam®, Maxamyl® (Genencor International Inc.) and KAM® (KAO, Japan). Suitable amylases are Natalase®, Stainzyme® and Stainzyme Plus®.

The wash liquor preferably comprises a detergent composition. As mentioned earlier, the detergent composition may comprise the amylase enzyme. Alternatively, the amylase enzyme may be added directly to the wash liquor.

Suitable detergent compositions comprise a detersive surfactant. The detersive surfactant can be present at a level of from 5% to 70% by weight, preferably from 10% to 60% by weight, more preferably from 20% to 50% by weight, of the detergent composition. The detersive surfactant can be selected from the group consisting of: anionic surfactants, nonionic surfactants, and mixtures thereof.

Suitable anionic surfactants include any of the conventional anionic surfactant types typically used in liquid detergent products. These include the alkyl benzene sulfonic acids and their salts as well as alkoxylated or un-alkoxylated alkyl sulfate materials.

Preferred anionic surfactants are the alkali metal salts of $C_{10-16}$ alkyl benzene sulfonic acids, preferably $C_{11-14}$ alkyl benzene sulfonic acids. Preferably the alkyl group is linear and such linear alkyl benzene sulfonates are known as "LAS". Alkyl benzene sulfonates, and particularly LAS, are well known in the art. Such surfactants and their preparation are described for example in U.S. Patents 2,220,099 and 2,477,383. Especially preferred are the sodium and potassium linear straight chain alkylbenzene sulfonates in which the average number of carbon atoms in the alkyl group is from about 11 to 14. Sodium $C_{11}$-$C_{14}$, e.g., $C_{12}$, LAS is especially preferred. Preferably the anionic surfactant comprises at least 50%, more preferably at least 60% and especially 70% by weight of the anionic surfactant of LAS.

Another preferred type of anionic surfactant comprises ethoxylated alkyl sulfate surfactants. Such materials, also known as alkyl ether sulfates or alkyl polyethoxylate sulfates, are those which correspond to the formula:

$$R'\text{-O-}(C_2H_4O)_n\text{-}SO_3M$$

wherein R' is a $C_8$-$C_{20}$ alkyl group, n is from about 1 to 20, and M is a salt-forming cation. Preferably, R' is $C_{10}$-$C_{18}$ alkyl, n is from about 1 to 15, and M is sodium, potassium, ammonium, alkylammonium, or alkanolammonium. Most preferably, R' is a $C_{12}$-$C_{16}$, n is from about 1 to 6 and M is sodium.

The alkyl ether sulfates will generally be used in the form of mixtures comprising varying R' chain lengths and varying degrees of ethoxylation. Frequently such mixtures will inevitably also contain some unethoxylated alkyl sulfate materials, i.e., surfactants of the above ethoxylated alkyl sulfate formula wherein n=0.

Unethoxylated alkyl sulfates are also suitable for use as an anionic surfactant component. Preferred unalkoyxylated, e.g., unethoxylated, alkyl ether sulfate surfactants are those produced by the sulfation of higher $C_8$-$C_{20}$ fatty alcohols. Conventional primary alkyl sulfate surfactants have the general formula:

$$ROSO_3^-M^+$$

wherein R is typically a linear $C_8$-$C_{20}$ hydrocarbyl group, which may be straight chain or branched chain, and M is a water-solubilizing cation. Preferably R is a $C_{10}$-$C_{15}$ alkyl, and M is alkali metal. Most preferably R is $C_{12}$-$C_{14}$ and M is sodium.

Suitable nonionic surfactants useful herein can comprise any of the conventional nonionic surfactant types typically used in liquid detergent products. These include alkoxylated fatty alcohols, ethylene oxide (EO)-propylene oxide (PO) block polymers, and amine oxide surfactants. Preferred for use in the liquid detergent products herein are those nonionic surfactants which are normally liquid.

Preferred nonionic surfactants for use herein include the alcohol alkoxylate nonionic surfactants. Alcohol alkoxylates are materials which correspond to the general formula:

$$R^1(C_mH_{2m}O)_nOH$$

wherein $R^1$ is a $C_8$ - $C_{16}$ alkyl group, m is from 2 to 4, and n ranges from 2 to 12. Preferably $R^1$ is an alkyl group, which may be primary or secondary, that contains from 9 to 15 carbon atoms, more preferably from abut 10 to 14 carbon atoms. Preferably also the alkoxylated fatty alcohols will be ethoxylated materials that contain from 2 to 12 ethylene oxide moieties per molecule, more preferably from 3 to 10 ethylene oxide moieties per molecule.

The alkoxylated fatty alcohol materials useful in the liquid detergent compositions herein will frequently have a hydrophilic-lipophilic balance (HLB) which ranges from about 3 to 17. More preferably, the HLB of this material will range from about 6 to 15, most preferably from about 8 to 15. Alkoxylated fatty alcohol nonionic surfactants have been marketed under the tradenames Neodol and Dobanol by the Shell Chemical Company.

Another type of nonionic surfactant which is liquid and which may be utilized in the compositions of this invention comprises the ethylene oxide (EO) - propylene oxide (PO) block polymers. Materials of this type are well known nonionic surfactants which have been marketed under the tradename Pluronic. These materials are formed by adding blocks of ethylene oxide moieties to the ends of polypropylene glycol chains to adjust the surface active properties of the resulting block polymers. EO-PO block polymer nonionics of this type are described in greater detail in Davidsohn and Milwidsky; Synthetic Detergents, 7th Ed.; Longman Scientific and Technical (1987) at pp. 34-36 and pp. 189-191 and in U.S. Patents 2,674,619 and 2,677,700.

Yet another suitable type of nonionic surfactant useful herein comprises the amine oxide surfactants. Amine oxides are mateials which are often referred to in the art as "semi-polar" nonionics. Suitable amine oxides can have the formula: $R(EO)_x(PO)_y(BO)_zN(O)(CH_2R')_2.qH_2O$. In this formula, R is a relatively long-chain hydrocarbyl moiety which can be saturated or unsaturated, linear or branched, and can contain from 8 to 20, preferably from 10 to 16 carbon atoms, and is more preferably $C_{12}$-$C_{16}$ primary alkyl. R' is a short-chain moiety preferably selected from hydrogen, methyl and -$CH_2OH$. When x+y+z is different from 0, EO is ethyleneoxy, PO is propyleneoxy and BO is butyleneoxy. Amine oxide surfactants are illustrated by $C_{12-14}$ alkyldimethyl amine oxide.

In the liquid detergent compositions herein, the essential detersive surfactant component may comprise combinations of anionic and nonionic surfactant materials. When this is the case, the weight ratio of anionic to nonionic will typically range from 100:1 to 1:100, more typically from 20:1 to 1:20.

The detergent compositions can be liquid, powder, or unit-dose in form. The detergent composition can comprise a laundry washing adjuncts, typically at a level of from 0.1% to 30% by weight, preferably from 0.5% to 20% by weight, more preferably from 1% to 10% by weight of the detergent composition.

Such laundry washing adjuncts can be selected from the group consisting of: other detersive enzymes, builders, chelants, soil release polymers, soil suspending polymers, optical brighteners, dye transfer inhibition agents, bleach, whitening agents, suds suppressors, fabric care benefit agents, solvents, stabilizers, buffers, structurants, dyes and perfumes and combinations of these adjunct types. All of these materials are of the type conventionally utilized in laundry detergent products.

Suitable additional enzymes include, but are not limited to, hemicellulases, peroxidases, proteases, cellulases, xylanases, lipases, phospholipases, esterases, cutinases, pectinases, keratanases, reductases, oxidases, phenoloxidases, lipoxygenases, ligninases, pullulanases, tannases, mannanases, pentosanases, malanases, ß-glucanases, arabinosidases, hyaluronidase, chondroitinase, laccase, and combinations thereof. A preferred enzyme combination comprises a cocktail of conventional detersive enzymes like protease, lipase, cutinase and/or cellulase in conjunction with amylase. Detersive enzymes are described in greater detail in U.S. Patent No. 6,579,839.

Suitable soil suspending polymers may be selected from the group consisting of: polyesters, polycarboxylates, saccharide-based materials, modified polyethyleneimines, modified hexamethylenediamine, branched polyaminoamines, modified polyaminoamide, hydrophobic polyamine ethoxylate polymers, polyamino acids, polyvinylpyridine N-oxide, N-vinylimidazole N-vinylpyrrolidone copolymers, polyvinylpyrrolidone, polyvinyloxazolidone, polyvinylimidazole and mixtures thereof.

If used, soil suspending polymers are typically added at a level of 0.01 % to 20%, preferably 0.1 % to 10%, more preferably 0.2 % to 2% by weight of the composition of a soil suspending polymer

The detergent composition may also comprise additional fabric care or benefit agents which can be deposited onto fabrics being laundered and which thereupon provide one or more types of fabric care or treatment benefits. Such benefits can include, for example, fabric softness, antistatic effects, ease-of-ironing benefits, anti-abrasion benefits, anti-pilling effects, color protection, wrinkle removal or improved resistance to wrinkling, fabric substantive perfume or odor benefits, malodor protection benefits, and the like.

The detergent composition is typically added such that the wash liquor comprises the detersive surfactant at a level of from 50 to 5000 ppm, more preferably from 100 to 2000 ppm, most preferably from 200 to 800 ppm in the wash liquor.

Additional optional steps:

In preferred embodiments, the fabric is ironed after pretreating with starch, and but before the fabric has been soiled or stained. More preferably, the fabric is ironed while still moist, i.e after the fabric has been spun at the end of a normal washing cycle of a washer-extractor machine (or after the pressing treatment of a tunnel washed) but before being dried either by treatment with a home or professional dryer, or by line-drying.

EXAMPLES

A professional washing machine (Electrolux W365H) was filled with 20 knitted cotton, 20 flat cotton and 20 polycotton swatches and a 3 kg ballast load. The swatches were treated with a 2-rinse program, the first rinse using water with a hardness of 13.8 dH, the second rinse also used water with a hardness of 13.8 dH but with the addition of the below mentioned starch. Both rinses used cold water at a temperature of 10-20°C, and a water level of 38 liters.

The starch containing product which used was Ecolab Noxa Liquid (comprising 30 % by weight of starch) and was dosed at 19.23 ml/kg of dry fabric load (25 g/kg of dry fabric load) The starch was added via the dispenser, making sure that all the starch was delivered into the drum.

The swatches were ironed after tumble drying using an Electrolux IB3 2316 roll ironer using the high temperature setting.

The swatches were than stained with a variety of stains at Warwick Equest Ltd., using their standard stain preparation procedures. Comparative sets of stains were prepared at Warwick on fabrics that were washed in a similar manner, but without the addition of starch.

The subsequent wash test was done using four identical washing machines (Electrolux W365H), using the stain sets described above, in addition to a standard 3 kg (terry towel, cotton and polycotton) ballast load. Each treatment was washed four times (once in each of the machines), and the Stain removal results were averaged.

Treatment A consisted of washing non starched stain swatches with a product non containing amylase. The product was formulated the same as the current commercial Ariel (Procter & Gamble "Professional System # 1"), with the exception that no amylase enzyme was added. Treatment B consisted of washing the starched stain swatches with the same laundry as used in treatment A. I.e. a laundry product which comprised no amylase enzyme.

Treatment C consisted of washing the non starched stain swatches with the the current commercial Ariel (Procter & Gamble "Professional System # 1"), formulated with an amylase enzyme.

Treatment D consisted of washing the starched stain swatches with the amylase-containing Ariel product.

The stain removal index (SRI) is calculated for the wash loads according to the following formula:

$$SRI = 100 * (\Delta E_{AB} - \Delta E_{AD}) / \Delta E_{AB,}$$

Where $\Delta E_{AB}$ is the color difference between the stain-free region of the fabric before washing and the stain before washing, and

$\Delta E_{AD}$ is the color difference between the stain-free region of the fabric before washing and the stain after washing,

| Stain | A | B | C | D |
|---|---|---|---|---|
| Stain swatch | non starched | starched | non starched | starched |
| Laundry product used in subsequent wash | nil amylase | nil amylase | with amylase | with amylase |
| | Stain removal Index SRI | Delta SRI versus A | Delta SRI versus A | Delta SRI versus A |
| | | | | |
| Ragu, flat cotton | 59.4 | + 2.1 | + 24.3 | + 25.3 |
| Ragu, polycotton | 77.8 | + 1.2 | + 13.3 | + 14.6 |
| Ragu, knitted cotton | 57.7 | -1.5 | +26.9 | + 28.3 |
| Chocolate Ready Break, polycotton | 65.7 | -1.9 | + 11.8 | + 12.9 |
| Red silica, polycotton | 56.9 | + 6.8 | + 0.7 | + 8.5 |
| Black Todd clay / PC | 79.3 | +3.8 | +0.1 | +5.8 |
| Dirty Cooking oil, polycotton | 60.3 | + 2,7 | + 4.3 | + 10.2 |
| Bacon Grease, polycotton | 49.4 | -7.5 | + 4.8 | + 8.1 |
| Lipstick, polycotton | 50.9 | +4.0 | -1.1 | +7.5 |
| Make-up, polycotton | 84.2 | +6.8 | -1.2 | +8.2 |
| Make-up, knitted cotton | 51.1 | +10.9 | +0.4 | +14.2 |

As can be seen from the data above, pretreating the fabrics results in improved stain removal, not only of stains which are typically digested by amylase, but also of stains which typically could not have been removed through treatment with an amylase containing laundry detergent composition.

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm".

**Claims**

1. A method for removing stains from fabric, comprising the steps of:

    a) applying starch to a fabric;
    b) in a subsequent wash cycle, washing the fabric in a wash liquor comprising amylase enzyme.

2. The method according to claim 1, wherein the starch is applied to the fabric: during a wash cycle, during a rinse cycle, on the wet fabrics after laundering, or on the dried fabric after laundering.

3. The method according to any preceding claim, wherein the starch is selected from cold water soluble starches.

4. The method according to any preceding claim, wherein the starch is applied at a level of from 0.001 to 10, preferably 0.01 to 1, more preferably from 0.03 to 0.2 g/Kg of dry fabric.

5. The method according to any preceding claims, wherein after starch has been applied to the fabric, the fabric is:

   a) left to dry, and then
   b) left for soil and/or dirt to deposit onto the fabric.

6. The method according to any preceding claims, wherein the fabric is ironed after applying the starch to the fabric, but before the fabric is left for soil and/or dirt to deposit onto the fabric.

7. The method according to any preceding claims, wherein the amylase enzyme is present in the wash liquor at a level of from 0.001 ppm to 10 ppm, preferably 0.01 ppm to 1 ppm, more preferably 0.03 ppm to 0.2 ppm.

8. The method according to any preceding claims, wherein the amylase enzyme is selected from alpha-amylases, variants of alpha-amylases, and mixtures thereof.

9. The method according to any preceding claims, wherein the wash liquor further comprises a surfactant, preferably a surfactant selected from the group consisting of: anionic surfactant, non-ionic surfactant, and mixtures thereof.

10. The method according to any preceding claims, wherein the wash liquor further comprises a soil suspending agent.

11. The method according to claim 10, wherein the fabric is ironed while wet.

12. The method according to any preceding claims, wherein the fabric is treated to reduce or eliminate dinginess and/or stains.

13. The method according to claim 12, wherein the fabric is treated to reduce or eliminate a starch or carbohydrate based stains, in combination with stains which are not starch or carbohydrate based.

14. The use of starch for facilitating the removal of a stain from a fabric, wherein the fabric is treated with starch prior to deposition of the soil.

15. The use according to claim 14, wherein the stain comprises: cooking oils, butter, bacon or other food greases; foundation, lipstick, mascara, massage oil, or other cosmetics; mud, humus, clay, rust or other particulate inorganic materials, and mixtures thereof.

Europäisches
Patentamt

European
Patent Office

Office européen
des brevets

**EUROPEAN SEARCH REPORT**

Application Number

EP 15 19 0592

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2014/200656 A1 (DANISCO US INC [US]) 18 December 2014 (2014-12-18) <br> * paragraph [0002] * <br> * example 6 * <br> ----- | 1-13 | INV. <br> C11D3/22 <br> C11D3/386 <br> C11D11/00 |
| X | WO 02/066568 A2 (PROCTER & GAMBLE [US]) 29 August 2002 (2002-08-29) <br><br> * page 1, paragraph 2 * <br> * page 3, last paragraph - page 4, paragraph 2 * <br> * page 11, paragraph 3 * <br> * claims 17-20, 23, 24 * <br> ----- | 1-5, 7-10, 12-15 | |
| X,D | EP 0 763 593 A1 (NAT STARCH CHEM INVEST [US]) 19 March 1997 (1997-03-19) <br> * page 2, line 54 - page 3, line 6 * <br> * examples * <br> ----- | 1-15 | |

TECHNICAL FIELDS
SEARCHED (IPC)

C11D

The present search report has been drawn up for all claims

| Place of search | Date of completion of the search | Examiner |
|---|---|---|
| The Hague | 12 April 2016 | Bertran Nadal, Josep |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

 

& : member of the same patent family, corresponding
document

EPO FORM 1503 03.82 (P04C01)

# EP 3 159 394 A1

## ANNEX TO THE EUROPEAN SEARCH REPORT
## ON EUROPEAN PATENT APPLICATION NO.

EP 15 19 0592

This annex lists the patent family members relating to the patent documents cited in the above-mentioned European search report.
The members are as contained in the European Patent Office EDP file on
The European Patent Office is in no way liable for these particulars which are merely given for the purpose of information.

12-04-2016

| Patent document cited in search report | | Publication date | Patent family member(s) | | Publication date |
|---|---|---|---|---|---|
| WO 2014200656 | A1 | 18-12-2014 | NONE | | |
| WO 02066568 | A2 | 29-08-2002 | AT | 409732 T | 15-10-2008 |
| | | | AU | 2002233951 A1 | 04-09-2002 |
| | | | CA | 2433596 A1 | 29-08-2002 |
| | | | EP | 1360256 A2 | 12-11-2003 |
| | | | ES | 2313990 T3 | 16-03-2009 |
| | | | JP | 2004524405 A | 12-08-2004 |
| | | | US | 2002077263 A1 | 20-06-2002 |
| | | | WO | 02066568 A2 | 29-08-2002 |
| EP 0763593 | A1 | 19-03-1997 | DE | 69625558 D1 | 06-02-2003 |
| | | | EP | 0763593 A1 | 19-03-1997 |
| | | | JP | 4230546 B2 | 25-02-2009 |
| | | | JP | H09118897 A | 06-05-1997 |
| | | | US | 5763381 A | 09-06-1998 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 10127919 A1
- US 2609326 A
- US 2999031 A
- EP 0763593 A1
- US 4499116 A
- US 5149799 A

- US 2220099 A
- US 2477383 A
- US 2674619 A
- US 2677700 A
- US 6579839 B

**Non-patent literature cited in the description**

- *Cereal Foods World,* 1988, 306

- **DAVIDSOHN ; MILWIDSKY.** Synthetic Detergents. Longman Scientific and Technical, 1987, 34-36, 189-191